# EUROPÄISCHE PATENTSCHRIFT

(11) **EP 1 714 058 B1**
(45) Veröffentlichungstag und Bekanntmachung des Hinweises auf die Patenterteilung: **27.08.2008**
(21) Anmeldenummer: 05706184.8
(22) Anmeldetag: 10.02.2005
(51) Int. Cl.: F16J 13/10

(54) **VERRIEGELUNGSEINRICHTUNG ZUM FESTLEGEN EINES DECKELS**
LOCKING DEVICE FOR FIXING A LID
DISPOSITIF DE VERROUILLAGE POUR FIXER UN COUVERCLE

(30) Priorität: 10.02.2004 AT 1952004
(43) Veröffentlichungstag der Anmeldung: 25.10.2006
(73) Patentinhaber: NATEX Prozesstechnologie GesmbH, A-2630 Ternitz (AT)
(72) Erfinder: MEINDL, Peter, A-2630 Ternitz (AT); LANG, Franz, A-2632 Wimpassing (AT); LACK, Eduard, A-2700 Wiener Neustadt (AT); GLANZ, Ernst, A-2840 Grimmenstein (AT); SEIDLITZ, Helmut, A-2630 Ternitz (AT); TRUKSES, Albert, A-2640 Enzenreith (AT)
(74) Vertreter: Haffner, Thomas M.
(86) Internationale Anmeldenummer: PCT/AT2005/000043
(87) Internationale Veröffentlichungsnummer: WO 2005/075879

(56) Entgegenhaltungen:
- EP-A- 0 272 123
- DE-A1- 4 205 867
- FR-A- 1 527 144
- GB-A- 2 134 206
- US-A- 1 808 403
- US-A- 4 102 474

## Beschreibung

Die Erfindung bezieht sich auf eine Verriegelungseinrichtung zum Festlegen eines Deckels an einer Öffnung eines Druckbehälters mit wenigstens zwei quer zur Achse der Öffnung bewegbaren Verriegelungssegmenten, welche an ihrem Umfang Vorsprünge und rillenförmige Ausnehmungen aufweisen, die in der Schließlage mit Ausnehmungen bzw. Vorsprüngen am Rand der Öffnung zusammenwirken, wobei der Verschiebeantrieb der Segmente an den Segmenten und wenigstens einer am Deckel oder einem mit dem Deckel verbundenen Bauteil angeordneten Angriffsstelle angelenkt ist. Solch eine Verriegelungseinrichtung ist, zum Beispiel, aus Dokument FR 1 527 144 bekannt.

Druckbehälter, und insbesondere rohrförmige Druckbehälter, werden unter anderem in der chemischen Technik eingesetzt. Insbesondere bei großen Durchmessern von Deckeln wird bei entsprechend hohem Druck, die auf derartige Deckel wirksame Kraft äußerst hoch und erfordert präzise und betriebssichere Verriegelungseinrichtungen. Es sind eine Reihe von Schnellverschlüssen bekannt geworden, wobei eine bekannte Verriegelungseinrichtung relativ schwere, eine Klammer bildende Bauteile aufweist, welche um eine zur Achse des Behälters im wesentlichen parallele Achse verschwenkt werden, um den Deckel freizugeben. Bei großen Behältern führt dies allerdings zu überaus schweren und relativ großen Bauteilen. Auch andere bekannte Schnellverschlüsse erfordern bei entsprechend größeren Kräften massivere Ausbildungen sowohl des Behälterrandes als auch von Verriegelungsbolzen, da derartige Verschlusstypen über den Umfang des Behälters radial zur Behälterachse eine Mehrzahl von Bohrungen aufweisen müssen. Auch der Deckel des Behälters weist bei derartigen Ausbildungen radial zur Behälterachse verlaufende Bohrungen auf, welche in eine fluchtende Lage zu den Bohrungen am Rand des Behälters gebracht werden müssen, worauf Verriegelungsbolzen in die zueinander fluchtenden Bohrungen eingesteckt werden. Die gesamten Kräfte werden in diesem Falle von Bolzen aufgenommen, welche entsprechend groß bemessen sein müssen, um der Schwerbelastung standhalten zu können.

Um derartige Verschlüsse trotz hoher wirksamer Kräfte mit entsprechend kleineren, leichteren und sicher zu betätigenden Bauteilen zu verriegeln, wurde in der AT 397 420 bereits vorgeschlagen, mehrteilige Verriegelungsglieder, welche nach Art eines mehrteiligen Ringes ausgebildet sind, anzuordnen, welche insgesamt einen Segmentverschluss bilden. Die einzelnen Verriegelungssegmente werden in Umfangsnuten am Innenrand der Behälteröffnung bewegt und in dieser Lage verspannt.

Mit zunehmender Deckelgröße und zunehmendem Druck werden, wie eingangs erwähnt, die jeweils aufzunehmenden Kräfte entsprechend größer und es werden daher bei einem derartigen Segmente aufweisenden Verschluss entsprechend größere Bauteile benötigt, welche eine Mehrzahl von in axialer Richtung der Öffnung übereinander liegenden Umfangsnuten bzw. Vorsprünge aufweisen, um über die Summe derartiger Nuten und Vorsprünge die entsprechenden Druckkräfte aufnehmen zu können. Die auf diese Weise zunehmende Baugröße der Segmente führt entsprechend zu einer Gewichtserhöhung der Segmente und erfordert spezielle Maßnahmen, um einen sicheren Antrieb ohne Gefahr von Überbeanspruchung des Antriebs oder der Führung der Segmente aus einer Außereingriffsposition in eine Eingriffsposition zur Verriegelung des Deckels zu gewährleisten.

Die Erfindung zielt nun darauf ab, eine Verriegelungseinrichtung der eingangs genannten Art zu schaffen, mit welcher auch relativ größer und schwerer bauende Verriegelungssegmente sicher mit geringen Kräften aus einer Außerbetriebstellung in eine Verriegelungsposition verbracht werden können, und mit welcher die Sicherheit des Verschlusses auch bei großbauenden Segmenten gewährleistet ist. Zur Lösung dieser Aufgabe besteht die erfindungsgemäße Ausbildung der eingangs genannten Verriegelungseinrichtung im wesentlichen darin, dass die in Umfangsrichtung des Deckels angeordneten Segmente jeweils unter Zwischenschaltung eines vom Verschiebeantrieb gesonderten, mit dem jeweiligen Segment (5) gelenkig verbundenen Schwenkarmes gelenkig am Deckel abgestützt sind. Dadurch, dass die Segmente unter Zwischenschaltung eines derartigen Schwenkarmes gelenkig am Deckel abgestützt sind, wird die Gefahr der Überbeanspruchung von Linearführungen, wie sie bisher verwendet wurden, vermieden und es wird eine optimale Anpassung der Segmente in der Schließlage ohne Überbeanspruchung der Antriebe sichergestellt. Es können somit insgesamt kleinere Antriebe eingesetzt werden. Gegenüber bekannten Ausbildungen, bei welchen teilweise nicht exakt definierte Reibungskräfte entstehen, welche den korrekten Verschiebeweg bzw. den Verschiebeantrieb der Verriegelungssegmente beeinträchtigen könnten, erfolgt hier nur eine Anlenkung, nicht aber eine lineare Führung der Segmente in radialer Richtung, sodass große und schwerere Segmente auch bei außermittiger Beanspruchung sicher in ihre Verriegelungslage gebracht werden können. Exzentrische Beanspruchungen können ohne Bruch oder Beschädigung von Teilen der Segmente aufgenommen werden. Wesentlich ist hierbei, dass der Schwenkarm vom Verschiebeantrieb gesondert ist. Der Schwenkarm ist somit nicht Teil der Antriebskette zum Betätigen der Verriegelungssegmente. Der Schwenkarm hat vielmehr die Funktion, das jeweilige Segment mit einer gezielten Bewegungsfreiheit zu führen und mit einer gezielten Nachgiebigkeit zu tragen, wobei der Schwenkarm keine aus dem Innendruck des Behälters resultierenden Kräfte aufnimmt.

Ein entsprechend kleinbauender Antrieb zur Verschiebung bzw. Verlagerung der Segmente in ihre Schließposition lässt sich hierbei insbesondere dadurch gewährleisten, dass der Verschiebeantrieb der Segmente von jeweils wenigstens einem Linearenantrieb je Segment gebildet ist, welcher an den Segmenten und wenigstens einer am Deckel oder einem mit dem Deckel verbundenen Bauteil angeordneten Angriffsstelle angelenkt ist. Unter einem derartigen Linearantrieb sind hierbei insbesondere hydraulische und/oder pneumatische Zylinder-Kolbenaggregate ebenso wie elektromechanische oder elektrohydraulische Linearantriebe zu verstehen. Insbesondere für große Verriegelungssegmente können ohne weiteres auch mehrere Linearantriebe je Segment eingesetzt werden, wobei eine entsprechende Schwenkbarkeit der Segmente über den gesamten Verstellweg sichergestellt werden kann und zur Folge hat, dass ohne exzentrische Beanspruchungen eine sichere Anpressungen der Segmente in die jeweiligen Verriegelungsnuten in der Schließlage gewährleistet ist. Die Segmente können insbesondere bei mehreren Linearantrieben je Segment bereits nach kurzem Verstellweg über ihren gesamten Umfang in der Schließlage mit den Ausnehmungen bzw. Vorsprüngen am Rand der Öffnung zusammenwirken, wobei hier geringe Antriebskräfte und entsprechend kleinbauende Linearantriebe und insbesondere hydraulische oder pneumatische Zylinder-Kolbenaggregate verwendet werden können. Eine weitere Verringerung der exzentrischen Belastung und damit eine weitere Erhöhung der Sicherheit lässt sich dadurch erzielen, dass die Angriffsstellen des Verschiebeantriebs an den Segmenten und/oder dem Deckel bzw. dem mit dem Deckel verbundenen Bauteil von Schwenklagern mit um wenigstens eine Achse schwenkbaren Lagerzapfen gebildet sind.

Der erfindungsgemäß wesentliche Schwenkarm für die Anlenkung bzw. gelenkige Verbindung der Segmente mit dem Deckel ermöglicht nun eine Reihe von weiteren Verbesserungen in Bezug auf die Verringerung der erforderlichen Verschiebekraft. Insbesondere ermöglicht ein derartiger Schwenkarm die Abstützung der Segmente am Deckel in einer schwebenden bzw. hängenden Position, bei welcher Reibungskräfte eliminiert werden. Zu diesem Zweck ist die Ausbildung bevorzugt so getroffen, dass die gelenkige Abstützung der Segmente am Deckel wenigstens eine sich quer zur Verstellbewegung der Segmente erstreckende schwenkbare Welle bzw. Schwenkachse aufweist, wobei eine schleifende Berührung der Verriegelungssegmente an der Deckeloberfläche dadurch verringert bzw. vermieden werden kann, dass die Segmente in axialer Richtung der Schwenkachsen höhenverstellbar mit dem Deckel verbunden sind.

Prinzipiell kann ein derartiger Schwenkarm selbst von einem Linearantrieb, welcher wiederum gelenkig am Schwenkarm und am Deckel angrenzt, verschwenkt werden, wobei eine besonders vorteilhafte Ausbildung darin besteht, dass der Schwenkarm über einen Dreh- bzw. Schwenkantrieb mit dem Deckel verbunden ist.

Um bei einer derart schwebenden Lagerung der Segmente, bei welcher naturgemäß äußerst geringe Verstellkräfte für die Betätigung der Verriegelungssegmente erforderlich sind, sicherzustellen, dass diese schwebende Position über den gesamten Verschiebeweg auch innerhalb der Fertigungstoleranzen der Deckeloberfläche gewährleistet ist, ist es sinnvoll, eine entsprechende Feinjustierung der Schwenkbarkeit des Schwenkarmes und damit der axialen Höhenverstellbarkeit der Segmente zu ermöglichen. Zu diesem Zweck ist mit Vorteil die Ausbildung so getroffen, dass die Welle bzw. Schwenkachse am Deckel in wenigstens einem quer zur Schwenkachse verschiebbaren und in seiner Verschiebelage feststellbaren Lager abgestützt ist, wobei mit einer derartigen Ausbildung auch Torsionsbeanspruchungen bei unterschiedlichen Segmentgewichten entsprechend Rechnung getragen werden kann. In besonders einfacher Weise erfolgt die höhenverstellbare Abstützung der Segmente in der Weise, dass die Welle bzw. Schwenkachse eine zur Achse parallele Hülse trägt, in welcher die Segmente schwenkbar und in Achsrichtung höhenverstellbar festlegbar sind, wobei mit Vorteil die Abstützung so erfolgen kann, dass die Segmente unter Zwischenschaltung von in axialer Richtung wirksamen Federn an der Hülse schwenkbar und höhenverstellbar abgestützt sind.

Insgesamt wird somit durch den beidseitigen unabhängigen Antrieb jedes einzelnen Segments ein Einschieben der Segmente auch bei einseitigen Reibungswiderständen gewährleistet, da keine Momentenbelastungen auf Führungen wirksam werden. Die Segmente können sich ohne Führungs- und Einstellmaßnahmen jeweils in der gewünschten Weise der Außenkontur anpassen, wobei die gelenkige Verbindung relativ zum Deckel, d.h. eine zentrale Anlenkung anstelle einer Linearführung zur Folge hat, dass die Konstruktion gegen Verformungen durch Innendruck unempfindlich wird und die Segmente je nach ggf. noch verbleibenden Reibungskräften auf der leichtergängigen Seite zuerst eingeschoben werden, wodurch auch das Einschieben auf der anderen Seite erleichtert wird. Die zentrale Anlenkung der jeweiligen Verriegelungssegmente führt zu einem besonders problemlosen tangentialen Einstellen der Segmentpositionen, was für die abschließende Verriegelung durch Einschieben von Verriegelungsbolzen von besonderer Wichtigkeit ist. Die schwebende Führung der Segmente erlaubt es, hohe und schmale Segmente, bei denen sonst eine überaus große Kippgefahr gewesen wäre, zu verwenden, da eine entsprechende Abstützung über die Schwenkachse und die zur Achse parallele Hülse erfolgt. Der Anwendungsbereich des Verschlusssystems wird auf die Art und Weise nicht nur auf höhere Drücke sondern auch auf größere Verschlussdurchmesser beträchtlich erweitert, wobei Abriebe auf einer Gleitfläche eliminiert werden können, womit auch aufwändige Schmierung von Gleitflächen entbehrlich wird. Insbesondere im Lebensmittelsektor wären derartige zu schmierende Gleitflächen auch ein Hygiene problem. Die Segmentantriebe können nicht nur schwächer ausgeführt werden, sondern in Problemfällen sogar mit der Hand bewegt werden, da Reibungskräfte im wesentlichen eliminiert werden. Die Anlenkung selbst kann auf ein definiertes Torsionsverhalten ausgelegt werden, wobei die Anlenkung nicht nur das zugeordnete Segment trägt sondern auch ein Mitgehen der Segmente mit der elastischen Verformung des Verschlusssystems unter den auf den Deckel wirksamen Innendruck zulässt, ohne die Lagerung der Anlenkung zu zerstören.

Die Verwendung des bereits genannten Federelementes erlaubt es das gewünschte Spiel exakt einzustellen und auf die Art und Weise das Segment knapp über dem Deckel zu führen, wobei das Federelement insbesondere bei der Verspannung in die Schließlage eine entsprechende Korrektur der Position in Höhenrichtung ermöglicht, ohne dass die Lagerung überbeansprucht wird.

Die zweiachsige Verstellbarkeit der Schwenkachse führt zu einem Kippen um zwei zueinander rechtwinkelig liegende waagerechte Achsen und damit zu einer genauen Paralleleinstellung des Segments zur unteren Auflagefläche. Alle Schrägstellungen durch Verformungen, Lagerspiele und Fertigungsungenauigkeiten können auf diese Weise kompensiert werden.

Wie bereits erwähnt, führt die exakte Erzielung der Verriegelungslage dazu, dass Verriegelungssegmente in einfacher Weise eingeführt werden können. Die Ausbildung ist hierzu mit Vorteil so getroffen, dass die Segmente jeweils wenigstens zwei Ausnehmungen oder Lageraugen für die Aufnahme von Verriegelungsgliedern bzw. Verriegelungszapfen aufweisen.

Prinzipiell lässt sich die erfindungsgemäße Verriegelungseinrichtung sowohl für vertikal angeordnete rohrförmige Druckbehälter als auch für horizontale Autoklaven bzw. Druckbehälter verwenden. Bei waagerechtem Verschluss müssen entsprechende Zusatzkonstruktionen für die Verschwenkbarkeit des Deckels und der Verriegelungseinrichtung vorgesehen sein. Mit Vorteil ist in diesen Fällen die Ausbildung so getroffen, dass der Deckel und die am Deckel angelenkten Segmente um eine die Achse der Öffnung schneidende oder kreuzende Achse schwenkbar mit einem Träger verbunden sind, welcher um eine außerhalb der Öffnung und normal auf die Achse der Öffnung liegende Schwenkachse gemeinsam mit dem Deckel verschwenkbar ist. Ein derartiger Träger erlaubt es die entsprechenden Befestigungs-, Einstell- und Krafteinleitungspunkte zur Verfügung zu stellen, wobei zum Zwecke der Vermeidung von Überbeanspruchungen von Dichtungselementen bei der Schließbewegung des Deckels die Ausbildung mit Vorteil so getroffen ist, dass der Deckel über eine außermittig zwischen Deckel und Träger angeordnete Federstange mit einstellbarer Lage mit dem Träger verbunden ist. Die Deckelanfederung erzwingt hierbei die korrekte Horizontalwinkellage des Deckels, wodurch der Dichtungsabrieb durch radiale Bewegungskomponenten beim Schließen verringert wird. Die Federn gleichen gleichzeitig die üblicherweise nicht mehr einstellbaren Ungenauigkeiten, wie sie auf Fertigungstoleranzen zurückzuführen sind, entsprechend aus.

Um sicherzustellen, dass die gewünschte Verriegelungsposition tatsächlich erreicht ist, werden entsprechende Kontrolleinrichtungen vorgeschlagen. Eine besonders vorteilhafte Ausbildung besteht hierbei darin, dass quer zum Rand der Öffnung in ringförmige Nuten des Öffnungsrandes eintauchende Betätigungsglieder eines Positionsschalters vorgesehen sind.

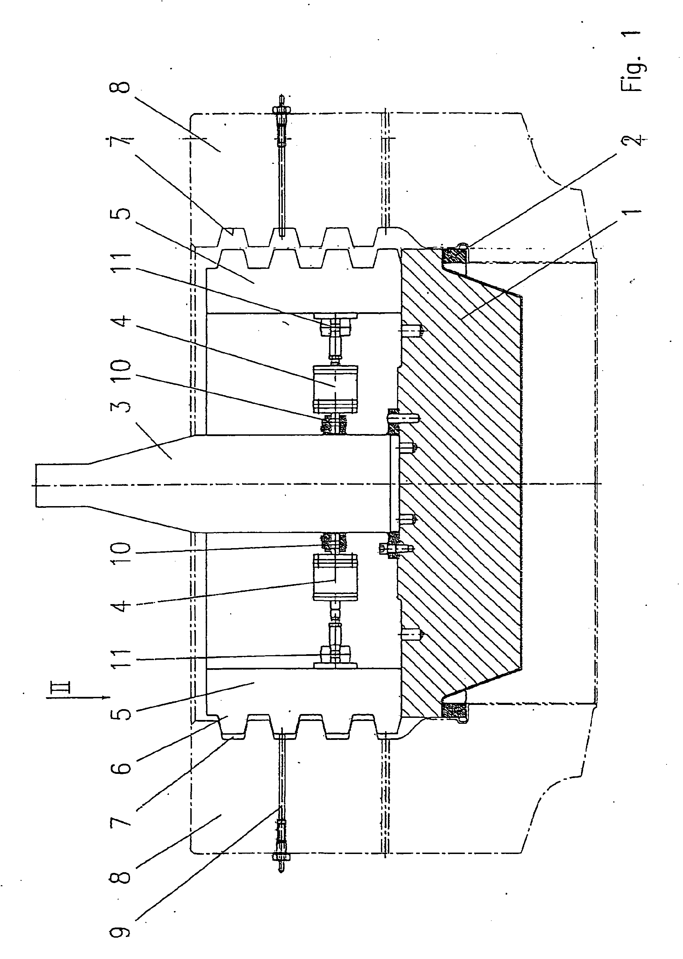

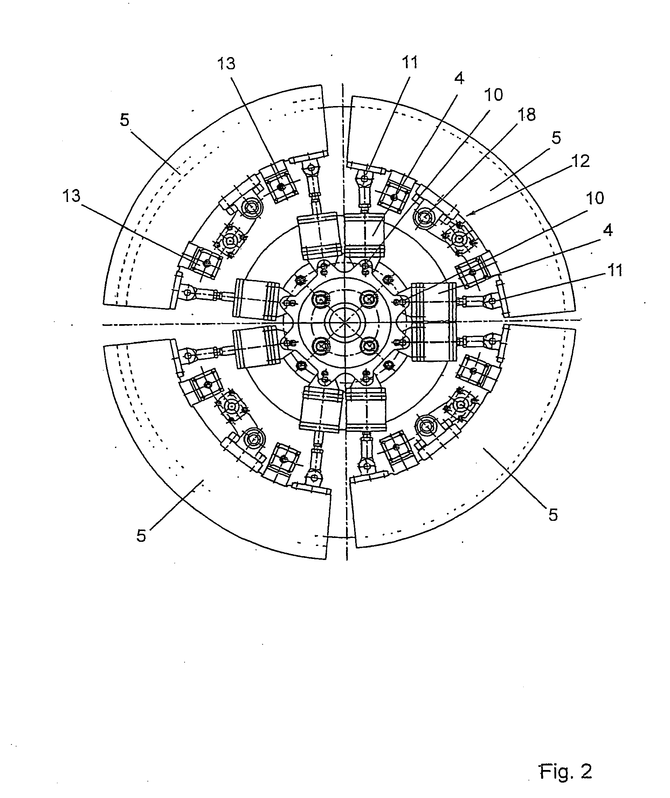

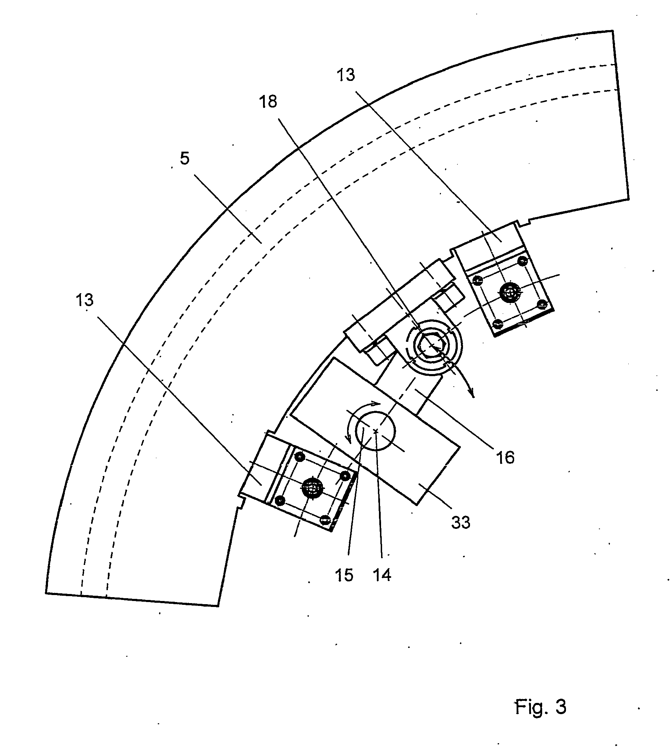

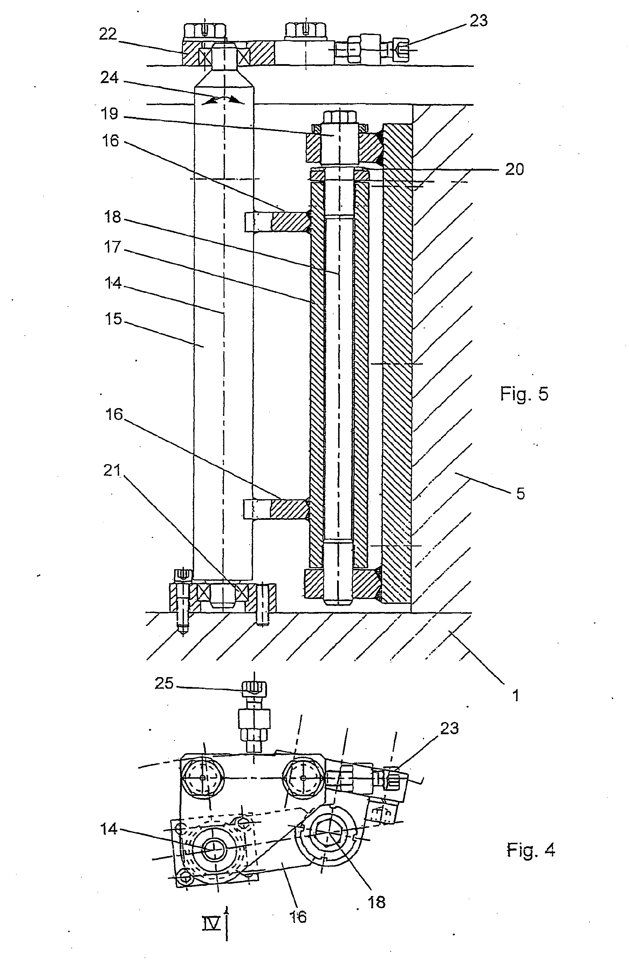

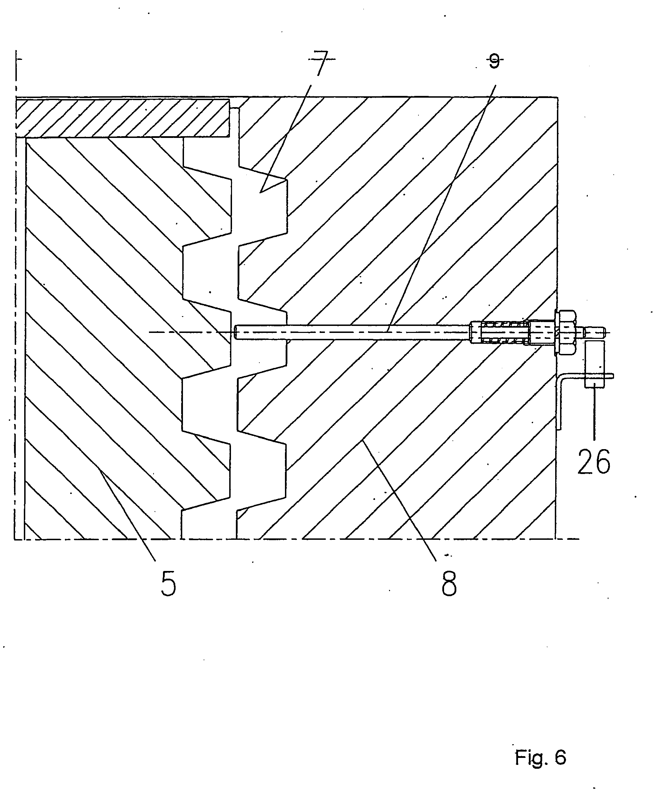

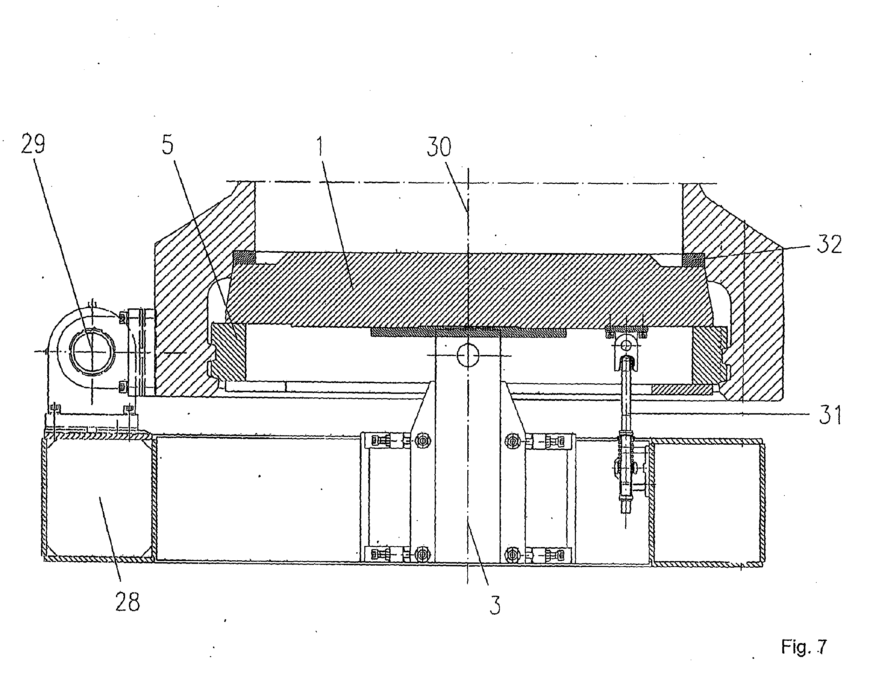

Die Erfindung wird nachfolgen anhand von in der Zeichnung schematisch dargestellten Ausführungsbeispielen näher erläutert. In dieser zeigen Fig.1 einen Deckel schematisch im Schnitt, Fig.2 eine Draufsicht auf die Ausbildung nach Fig.1 mit Details des Antriebes der Verriegelungssegmente, Fig.3 eine Detailansicht der Fig.2, Fig.4 eine vergrößerte Draufsicht auf ein Detail der Anlenkung der Segmente am Deckel, Fig.5 eine Ansicht in Richtung des Pfeiles V der Fig.4, Fig.6 Details eines Endlagendetektors zur Anzeige der korrekten Verriegelungsposition und Fig.7 eine abgewandelte Ausbildung der Deckelbetätigung für im wesentlichen horizontale Druckbehälter.

In Fig.1 ist ein Deckel 1 ersichtlich, welcher auf ringförmigen Dichtungselementen 2 aufliegt. Der Deckel wird durch eine zentrale Betätigungsstange 3 angehoben oder abgesenkt, wobei diese zentrale Betätigungsstange 3 gleichzeitig das Widerlager für hydraulische Zylinder-Kolbenaggregate 4 für den Antrieb von Verriegelungssegmente 5 ausbildet. Die Verriegelungssegmente 5 sind auf der linken Seite der Darstellung gemäß Fig.1 in der Verriegelungsposition und greifen mit ihren Umfangsrippen 6 in entsprechende Nuten 7 am Rand 8 des Behälters ein, wobei schematisch eine Betätigungsstange 9 für einen Positionsschalter angedeutet ist. Auf der rechten Seite der Darstellung nach Fig.1 befinden sich die Segmente 5 noch außer Eingriff in die Umfangsnuten 7 des Behälterrandes 8.

Die Zylinder-Kolbenaggregate 4 sind über Schwenklager 10 gelenkig mit dem mit dem Deckel 1 verbundenen Bauteil, nämlich der Betätigungsstange 3, verbunden. Weiters greifen die Zylinder-Kolbenaggregate 4 über Schwenklager 11 an den Segmenten 5 an.

Wie sich aus der Darstellung nach Fig.2 ergibt, sind nun je Segment 5 jeweils 2 hydraulische Zylinder-Kolbenaggregate 4 vorgesehen. Die Segmente 5 weisen weiters wiederum die Schwenklager 11 auf und sind selbst über ein in den Figuren 3 und 4 noch näher dargestelltes Gelenk 12 mit dem Deckel 1 verbunden, wobei dieses Gelenk 12 eine im wesentlichen normal auf die Deckeloberfläche stehende Schwenkachse 18 aufweist. Bei der Darstellung nach Fig.2 sind weiters Laschen 13 ersichtlich, in welche nach Verriegeln der Segmente 5 entsprechende Sicherungsstifte eingeschoben werden können, um die Schließlage zusätzlich mechanisch zu verriegeln. Bei der Darstellung gemäß Fig.3 ist ein möglicher Schwenkantrieb des Schwenkarmes 16 schematisch mit 33 angedeutet.

In der Darstellung nach Fig.4 und 5 ist nun ersichtlich, dass die Segmente 5 gelenkig am Deckel 1 abgestützt sind. Zu diesem Zweck ist eine Welle 15 vorgesehen, welche die Schwenkachse 14 ausbildet, wobei diese Welle 15 mit Schwenkarmen 16 verbunden ist, welche wiederum eine Hülse 17 tragen. In der um die Achse 14 mit dem Radius der Schwenkarme 16 schwenkbaren Hülse 17 ist um eine Achse 18 schwenkbar ein Bolzen 19 gelagert, welcher unter Zwischenschaltung von Tellerfedern 20 an der Hülse 17 abgestützt ist und selbst mit den Segmenten 5 verbunden ist. Die Segmente 5 können somit um die Achse 18 in der Hülse 17 verschwenkt werden und sind in Höhenrichtung unter Zwischenschaltung der Tellerfeder 20 so abgestützt, dass die dem Deckel 1 benachbarte Unterkante der Segmente 5 mit möglichst geringem Reibwiderstand am Deckel 1 anliegt, und insbesondere schwebend gegenüber dem Deckel 1 verankert ist. Um Torsionsspannungen auszugleichen und eine schwebende Aufhängung über den gesamten Verschiebe- bzw. Verschwenkweg sicherzustellen, kann die Schwenkachse 14 entsprechend feinjustiert werden. Die die Schwenkachse 14 aufweisende Welle 15 ist zu diesem Zweck zunächst in einem Lager 21 am Deckel 1 gelagert und kann an ihrem dieser Lagerstelle abgewandten Ende in einem Lagerbock 22 entsprechend justiert werden, wie dies insbesondere in Fig.4 verdeutlicht wird. Eine Justierschraube 23 erlaubt es hierbei den ganzen Lagerbock 22 zur Verschwenkung der Achse 14 in Richtung des Doppelpfeiles 24 zu verstellen, wohingegen die in Fig.4 ersichtliche weitere Stellschraube 25 eine entsprechende Verschwenkung in oder aus der Zeichenebene heraus ermöglicht. Insgesamt kann auf diese Weise eine schwebende Lagerung für die Segmente geschaffen werden, welche besonders geringe Verschiebekräfte zum Verschieben der Segmente in die Verriegelungslage gewährleistet, auch wenn schwere und große Verriegelungssegmente 5 zum Einsatz gelangen.

Wie aus der Darstellung nach Fig.6 ersichtlich, kann an der Außenseite des Randes 8 des Druckbehälters ein Positionsschalter 26 angeordnet werden, welcher durch ein in eine Nut 7 eintauchendes Betätigungsglied 9 betätigt werden kann. Mittels dieses Betätigungsgliedes 9 kann bei radialer Verschwenkung bzw. Verschiebung der Segmente 5 die exakte Position und damit auch die exakte Verriegelungslage abgetastet werden.

Bei der Darstellung nach Fig. 7 ist nun ein im wesentlichen horizontaler Druckbehälter vorgesehen, dessen Deckel 1 mit einem mit dem Deckel verbundenen Teil 3 in einem Träger 28 festgelegt ist. Der Träger 28 ist um eine außenliegende Schwenkachse 29 gemeinsam mit dem Deckel 1 und dem Betätigungsglied 3 des Deckels 1 verschwenkbar, wobei die exakte Winkelstellung des Deckels 1 relativ zur Achse 30 durch die Zwischenschaltung einer Federstange 31 in durch Toleranzen vorgegebenen Grenzen gehalten werde kann, um die Dichtungselemente 32 am Rand der Behälteröffnung vor Überlastung und Zerstörung zu sichern. Die Segmente 5 werden wiederum über einen in Fig.7 nicht näher dargestellten Antrieb radial nach auswärts bewegt, wobei der Antrieb hier wiederum an dem zentralen Teil 3 gelenkig abgestützt ist und im wesentlichen den Ausbildungen nach Fig.1 und 2 entspricht.

## Patentansprüche

1. Verriegelungseinrichtung zum Festlegen eines Deckels (1) an einer Öffnung (8) eines Druckbehälters mit wenigstens zwei quer zur Achse der Öffnung (8) bewegbaren Verriegelungssegmenten (5), welche an ihrem Umfang Vorsprünge (6) und rillenförmige Ausnehmungen aufweisen, die in der Schließlage mit Ausnehmungen (7) bzw. Vorsprüngen am Rand der Öffnung (8) zusammenwirken, wobei der Verschiebeantrieb (4) der Segmente (5) an den Segmenten (5) und wenigstens einer am Deckel (1) oder einem mit dem Deckel (1) verbundenen Bauteil (3) angeordneten Angriffsstelle angelenkt ist, **dadurch gekennzeichnet, dass** die in Umfangsrichtung des Deckels (1) angeordneten Segmente (5) jeweils unter zwischenschaltung eines vom Verschiebeantrieb (4) gesonderten, mit dem jeweiligen Segment (5) gelenkig verbundenen Schwenkarmes (16) gelenkig am Deckel (1) abgestützt sind.

2. Verriegelungseinrichtung nach Anspruch 1, **dadurch gekennzeichnet, dass** der Verschiebeantrieb der Segmente (5) von jeweils wenigstens einem Linearantrieb (4) je Segment (5) gebildet ist.

3. Verriegelungseinrichtung nach Anspruch 1 oder 2, **dadurch gekennzeichnet, dass** die Angriffsstellen des Verschiebeantriebs (4) an den Segmenten (5) und/oder dem Deckel (1),bzw. dem mit dem Deckel (1) verbundenen Bauteil (3) von Schwenklagern (10, 11) mit um wenigstens eine Achse schwenkbaren Lagerzapfen gebildet sind.

4. Verriegelungseinrichtung nach Anspruch 1,2 oder 3, **dadurch gekennzeichnet, dass** der Schwenkarm (16) über einen Dreh- bzw. Schwenkantrieb (33) mit dem Deckel (1) verbunden ist.

5. Verriegelungseinrichtung nach einem der Ansprüche 1 bis 4, **dadurch gekennzeichnet, dass** die gelenkige Abstützung der Segmente (5) am Deckel (1) wenigstens eine sich quer zur Verstellbewegung der Segmente (5) erstreckende schwenkbare Welle (15) bzw. Schwenkachse (14) aufweist.

6. Verriegelungseinrichtung nach einem der Ansprüche 1 bis 5, **dadurch gekennzeichnet, dass** die Segmente (5) in axialer Richtung der Schwenkachsen (14) höhenverstellbar mit dem Deckel (1) verbunden sind.

7. Verriegelungseinrichtung nach einem der Ansprüche 1 bis 6, **dadurch gekennzeichnet, dass** die Welle (15) bzw. Schwenkachse (14) am Deckel (1) in wenigstens einem quer zur Schwenkachse (14) verschiebbaren und in seiner Verschiebelage feststellbaren Lager (22) abgestützt ist.

8. Verriegelungseinrichtung nach einem der Ansprüche 1 bis 7, **dadurch gekennzeichnet, dass** die Welle (15) bzw. Schwenkachse (14) eine zur Achse parallele Hülse (17) trägt, in welcher die Segmente (5) schwenkbar und in Achsrichtung höhenverstellbar festlegbar sind.

9. Verriegelungseinrichtung nach Anspruch 8, **dadurch gekennzeichnet, dass** die Segmente (5) unter Zwischenschaltung von in axialer Richtung wirksamen Federn (20) an der Hülse (17) schwenkbar und höhenverstellbar abgestützt sind.

10. Verriegelungseinrichtung nach einem der Ansprüche 1 bis 9, **dadurch gekennzeichnet, dass** die Segmente (5) jeweils wenigstens zwei Ausnehmungen oder Lageraugen für die Aufnahme von verriegelungsgliedern bzw. Verriegelungszapfen aufweisen.

11. Verriegelungseinrichtung nach einem der Ansprüche 1 bis 10, **dadurch gekennzeichnet, dass** der Deckel (1) und die am Deckel (1) angelenkten Segmente (5) um eine die Achse (30) der Öffnung (8) schneidende oder kreuzende Achse schwenkbar mit einem Träger (28) verbunden sind, welcher um einer außerhalb der Öffnung und normal auf die Achse (30) der Öffnung liegende Schwenkachse (29) gemeinsam mit dem Deckel (1) verschwenkbar ist.

12. Verriegelungseinrichtung nach Anspruch 11, **dadurch gekennzeichnet, dass** der Deckel (1) über eine außermittig zwischen Deckel (1) und Träger (28) angeordnete Federstange (31) mit einstellbarer Lage mit dem Träger (28) verbunden ist.

13. Verriegelungseinrichtung nach einem der Ansprüche 1 bis 12, **dadurch gekennzeichnet, dass** quer zum Rand der Öffnung (8) in ringförmige Nuten (7) des Öffnungsrandes eintauchende Betätigungsglieder (9) eines Positionsschalters (26) vorgesehen sind.

## Claims

1. Locking device for the fixation of a lid (1) on an opening (8) of a pressure container with at least two locking segments (5) displaceable at right angles to the axis of the opening (8), which segments (5) bear protrusions (6) and groove-like recesses along their circumference, which in the locked position cooperate with recesses (7) and protrusions along the brim of the opening (8), whereby the displacement actuator (4) of the segments (5) is linked to the segments (5) and to at least one point of application that is on the lid (1) or on a member (3) connected to the lid (1), **characterised in that** the segments (5) that are arranged in the direction of the circumference of the lid (1) are pivotably supported on the lid (1) by a swivel arm (16), separate from the displacement actuator (4), being interposed, which swivel arm (16) in turn is pivotably connected to the segments (5).

2. Locking device according to claim 1, **characterised in that** the displacement actuator of the segments (5) is each made up of at least one linear actuator (4) per segment (5).

3. Locking device according to claim 1 or 2 **characterised in that** the points of application of the displacement actuator (4) on the segments (5) and/or on the lid (1) or the member (3) connected with the lid (1) are designed as hinge bearings (10,11) comprising bearing pins being pivotable about at least one axis.

4. Locking device according to claim 1, 2 or 3 **characterised in that** the swivel arm (16) is connected to the lid (1) via a rotary or swivel drive (33).

5. Locking device according to claim 1 to 4 **characterised in that** the pivotable support of the segments (5) on the lid (1) comprises at least one pivotable shaft (15) or pivot axle (14) extending at right angles to the displacement movement of the segments (5).

6. Locking device according to claim 1 to 5 **characterised in that** the segments (5) are connected to the lid (1) to be adjustable in an in axial direction of the pivot axis (14) in the height direction.

7. Locking device according to claim 1 to 6 **characterised in that** the axle (15) or swivel axis (14) is supported on the lid (1) on at least one bearing (22) being moveable at right angles to the swivel axis (14) and fixable in this adjusted position.

8. Locking device according to claim 1 to 7 **characterised in that** the axle (15) or swivel axis (14) carries a bushing (17) parallel to the axis, in which the segments (5) are pivotable and in direction of the axis height adjustably fixable.

9. Locking device according to claim 8 **characterised in that** the segments (5) are supported pivotably and height adjustable on the bushing (17) with in axial direction operative springs (20) being interposed.

10. Locking device according to claim 1 to 9 **characterised in that** the segments (5) comprise at least two recesses or bearing eyes for the reception of locking members or locking pins.

11. Locking device according to claim 1 to 10 **characterised in that** the lid (1) and the segments (5) linked to the lid (1) are mounted to a support (28) to be pivotable about an axis intersecting or crossing the axis (30) of the opening (8), the support (28) together with the lid (1) being pivotable about an axis (29) extending outside of the opening and perpendicular to the axis (30) of the opening.

12. Locking device according to claim 11 **characterised in that** the lid (1) is connected to the support (28) by a spring rod (31) having an adjustable position and being excentrically arranged between the lid (1) and the support (28).

13. Locking device according to claim 1 to 12 **characterised in that** actuating members (9) of a position switch (26) are provided, which actuating members (9) immerse in annular grooves (7) at right angles to the brim of the opening (8).

## Revendications

1. Dispositif de verrouillage pour fixer un couvercle (1) sur une ouverture (8) d'un récipient sous pression, comportant au moins deux segments de verrouillage (5) mobiles transversalement par rapport à l'axe de l'ouverture (8) qui, sur leur pourtour, présentent des éléments formant saillie (6) et des évidements en forme de rainures et qui, en position de fermeture, coopèrent avec des évidements (7) ou des éléments en saillie sur le bord de l'ouverture (8), l'actionnement de deplacement (4) des segments (5) étant articulée sur les segments (5) et sur au moins un point d'application disposé sur le couvercle (1) ou sur un une pièce (3) liée au couvercle (1), **caractérisé en ce que** les segments (5) disposés sur le pourtour du couvercle (1) sont respectivement supportés de façon articulée sur le couvercle (1) avec interposition d'un bras pivotant (16) séparé de l'actionnement de déplacement (4) et relié en étant articulé sur le segment (5) respectif.

2. Dispositif de verrouillage selon la revendication 1, **caractérisé en ce que** l'actionnement de déplacement des segments (5) est constituée respectivement par au moins un entraînement linéaire (4) par segment (5).

3. Dispositif de verrouillage selon la revendication 1 ou 2, **caractérisé en ce que** les points d'application de l'actionnement de déplacement (4) sur les segments (5) et/ou le couvercle (1) ou la pièce (3) liée au couvercle (1), sont formés par des paliers pivotants (10, 11) avec des tourillons pouvant pivoter autour d'au moins un axe.

4. Dispositif de verrouillage selon la revendication 1, 2 ou 3, **caractérisé en ce que** le bras pivotant (16) est relié au couvercle (1) par l'intermédiaire d'un entraînement rotatif ou pivotant (33).

5. Dispositif de verrouillage selon l'une des revendications 1 à 4, **caractérisé en ce que** le support articulé des segments (5) sur le couvercle (1) présente au moins un arbre (15) pivotant ou axe de pivotement (14) s'étendant transversalement par rapport au mouvement d'ajustement des segments (5).

6. Dispositif de verrouillage selon l'une des revendications 1 à 5, **caractérisé en ce que** les segments (5) sont reliés au le couvercle (1) de façon à être réglables en hauteur dans le sens axial des axes de pivotement (14).

7. Dispositif de verrouillage selon l'une des revendications 1 à 6, **caractérisé en ce que** l'arbre (15) ou l'axe de pivotement (14) est supporté sur le couvercle (1) dans au moins un palier (22) qui peut être déplacé transversalement à l'axe de pivotement (14) et dont la position de déplacement peut être fixée.

8. Dispositif de verrouillage selon l'une des revendications 1 à 7, **caractérisé en ce que** l'arbre (15) ou l'axe de pivotement (14) porte un manchon (17) parallèle à l'axe, dans lequel les segments (5) peuvent être supportés de façon à pouvoir pivoter et à pouvoir être réglés en hauteur dans le sens axial.

9. Dispositif de verrouillage selon la revendication 8, **caractérisé en ce que** les segments (5) sont supportés sur le manchon (17) de façon à pouvoir pivoter et à pouvoir être réglés en hauteur avec interposition de ressorts (20), agissants dans le sens axial.

10. Dispositif de verrouillage selon l'une des revendications 1 à 9, **caractérisé en ce que** les segments (5) présentent respectivement au moins deux évidements ou oeillets de palier pour le logement d'organes de verrouillage ou tenons de verrouillage.

11. Dispositif de verrouillage selon l'une des revendications 1 à 10, **caractérisé en ce que** le couvercle (1) et les segments (5) articulés sur le couvercle (1) sont reliés à un support (28), de façon à pouvoir pivoter autour d'un axe coupant ou croisant l'axe (30) de l'ouverture (8), ledit support pouvant pivoter en même temps que le couvercle (1) autour d'un axe de pivotement (29) situé à l'extérieur de l'ouverture et disposé normalement à l'axe (30) de l'ouverture.

12. Dispositif de verrouillage selon la revendication 11, **caractérisé en ce que** le couvercle (1) est relie au support (28) par l'intermédiaire d'une tige de ressort (31) réglable en position et disposée de façon excentrée entre le couvercle (1) et le support (28).

13. Dispositif de verrouillage selon l'une des revendications 1 à 12, **caractérisé en ce qu'**il est prévu des organes d'actionnement (9) d'un commutateur de position (26), qui pénètrent transversalement par rapport au bord de l'ouverture (8) dans des rainures (7) annulaires du bord de l'ouverture.
